# EUROPEAN PATENT APPLICATION

(11) **EP 0 938 875 A2**
(43) Date of publication of application: **01.09.1999**
(21) Application number: 99102448.0
(22) Date of filing: 09.02.1999
(51) Int. Cl.: A61C 13/30

(54) **Dental prosthesis support and method for its application**

(30) Priority: 26.02.1998 IT MI980385
(71) Applicant: Martelli, Roberto, 28100 Novara (IT); Massironi, Domenico, 26816 Ossago Lodigiano (Lodi) (IT)
(72) Inventor: Martelli, Roberto, 28100 Novara (IT); Massironi, Domenico, 26816 Ossago Lodigiano (Lodi) (IT)
(74) Representative: Ripamonti, Enrico, Dr. Ing.

(57) **Abstract**

A dental prosthesis support, comprising at least one pin to be inserted into the root canal of the tooth to be treated, and able to support a core of composite material; said pin is constructed of fibre through which light can pass.

A method for applying the aforesaid dental prosthesis support comprises suitably preparing the root canal, treating this latter using a suitable tool, then washing it; a dentinoenamel adhesive is then applied both inside the canal and onto the support pin, a fluid composite is injected into the root canal in which the pin is then inserted, the fluid composite is polymerized using a light source, and the core is completed by adding fluid composite.

## Description

This invention relates to a dental prosthesis support comprising a pin to be inserted into the root canal of the tooth to be treated.

The invention also relates to a method for applying said dental prosthesis support.

To achieve prosthetic recovery of endodontically treated teeth, it is known to use one or more pins each to be inserted into a root canal so that they can act as a support for the overlying tooth reconstruction.

In particular, for this purpose it is known to use carbon fibre pins to be inserted into the root canal and covered with composite materials, for example self-polymerizing composite cements.

However, the use of carbon fibre pins for this purpose has various drawbacks.

Firstly, the use of such pins requires the root canal to be specifically shaped, because the shape of the carbon fibre pin cannot be modified without damaging it irreparably.

Secondly, such pins do not allow a photopolymerizable composite material to be used inside the canal.

Moreover, the colour of the carbon fibre pin can sometimes show through and result in very poor appearance.

The object of this invention is therefore to provide a dental prosthesis support which is extremely practical, of good appearance and functional.

This object is attained according to the present invention by a dental prosthesis support, comprising at least one pin to be inserted into the root canal of the tooth to be treated, and able to support a core of composite material, characterised in that said pin is constructed of fibre through which light can pass.

The invention also relates to a method for applying a dental prosthesis support, comprising the following steps: preparing the root canal by filling the endodontium and removing the filling material, treating the root canal using a suitable tipped tool, then washing the canal, characterised by comprising the following further steps: applying a dentinoenamel adhesive both inside the canal and onto said pin, injecting fluid composite directly into the root canal, inserting the pin into the root canal, polymerizing the fluid composite using a light source, and completing the core by successive additions of fluid composite.

The invention has the following advantages over the state of the art.

Firstly, a glass fibre pin is easy adaptable to all root canals because its shape can be modified without undergoing damage, and its modulus of elasticity is much closer to that of the dentin compared with a carbon fibre pin.

Although a glass fibre pin is less rigid than a carbon fibre pin, it has greater mechanical strength.

This is due firstly to the fact that an exceptional bond forms between the pin and the composite material because the same chemical compound, namely silicon dioxide, is present in both components.

Moreover, as the glass fibre of the pin is transparent to light, a fluid photopolymerizable compound can be used to fill the entire space of the root canal, so achieving complete integration of the pin with the core.

In addition the pin transparency enables the composite material to be polymerized by exposing the composite material to light of suitable wavelength.

Finally, the transparent pin does not suffer from the poor appearance deriving from the use of carbon fibre pins, and requires less time for its application, besides enabling a core of good appearance to be reconstructed without using prosthetic covering.

Further advantages and characteristics of the invention will be more apparent from the ensuing description, given by way of non-limiting example with reference to the accompanying drawings, on which:
Figure 1 is a section through the root canal, into which a glass fibre pin of this invention has been inserted;
Figures 2-5 are sections through different stages in the application of the glass fibre pin;

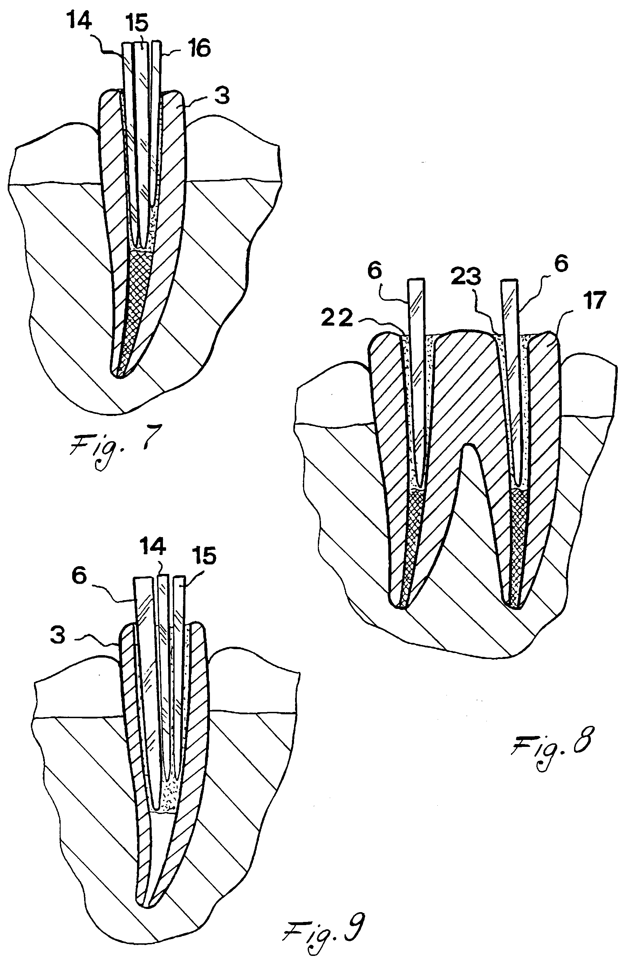

Figure 6 is a side view of the glass fibre pin of the invention;
Figure 7 is a section through an alternative embodiment of this invention, in which a plurality of small-dimension pins are inserted into the same root canal;
Figure 8 is a section through the root of a tooth provided with two root canals, each housing a glass fibre pin of the invention; and
Figure 9 is a section through a further embodiment of the invention, in which a plurality of small-dimension pins and one standard-dimension pin are inserted into the same root canal.

In the ensuing description reference will be made to some preferred embodiments of the invention, representing non-limiting examples of possible variants.

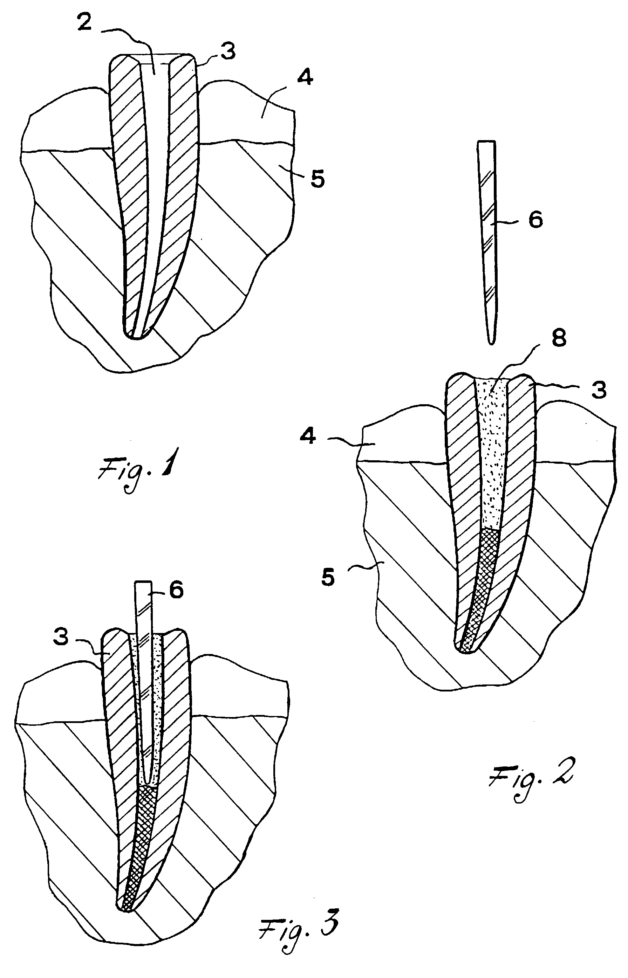

Figure 1 shows a section through the root canal 2 pertaining to a root 3 of a tooth to be treated, and in which a pin 6 is inserted; the bone 5 and the jaw 4 which surround the root 3 are also visible in section.

The pin 6 is used to support a core 10 of composite material.

The pin 6 is constructed of resin-reinforced glass fibre, to allow light to pass through.

It is important to note that to achieve the best mechanical properties for the prosthesis obtained with the pin of the invention, the pin 6 and the composite material 10 have at least one chemical compound in common, namely silicon dioxide.

Figure 7 shows a section through an alternative embodiment of the invention, in which a plurality of pins 14, 15, 16, all of small dimensions, are inserted in the same root canal 3.

Figure 8 shows a section through the root of a tooth 17, for example a molar tooth, provided with two root canals 22 and 23, each housing a pin 6.

Figure 9 shows a section through a further embodiment of the invention, in which a plurality of small-dimension pins 14, 15 and one standard-dimension pin 6 are inserted in the same root canal 3.

The pin 6 tapers slightly and has a rounded point 12. Alternatively the pin 6 can have a first portion with a certain taper, and a second portion with a different taper, terminating with a rounded point.

These shapes for the pin 6 are indicated as non-limiting examples of the possible shapes for the glass fibre pin of this invention.

The invention also relates to a method for applying the dental prosthesis support comprising the glass fibre pin.

The method of the invention comprises firstly preparing the root canal 2 by filling the endodontium in known manner.

The filling material is then removed, preferably using manual instruments to prevent stepping or perforations forming within the canal 2.

The canal 2 is then washed and worked with a suitable tipped tool, in particular a coarse diamond cutter, the purpose of which is solely to roughen the canal walls 8 as shown in Figure 2, but not to adapt it to the shape of the glass fibre pin 6.

At this point the pin 6 is tested to see how well it adapts to the canal 2, as a result of which the pin 6 can if necessary be modified to adapt it to the shape and dimensions of the canal 2.

This adaptation is achieved using a suitable tool and leaving a portion of the pin projecting beyond the occlusal entrance of the canal 2, to facilitate transmission of the photopolymerizing light at the appropriate time.

The surface of the glass fibre pin 6 is then treated with a suitable substance, such as hydrofluoric acid, and the dentin of the root canal 2 is treated with orthophosphoric acid.

After carefully washing the pin and the root canal, a dentinoenamel adhesive is applied both inside the canal 2 and onto the pin 6.

The adhesive can now be made to undergo initial photopolymerization by exposing the pin 6 to a light source of suitable wavelength.

At this point the fluid composite is directly injected into the root canal 2 until full.

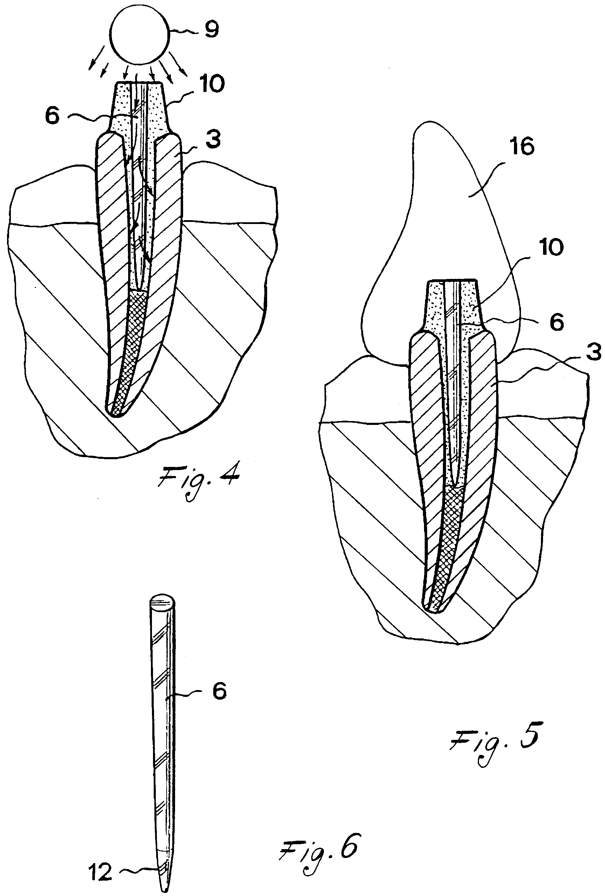

The pin 6 is then inserted into the root canal 2 and the fluid composite polymerized using light of suitable wavelength, this being aimed directly onto the top of the pin as shown by the light source 9 in Figure 4.

Finally the core 10 is completed by successive additions of fluid composite.

Figure 5 shows the composite material core 10 at the end of treatment, provided with a prosthesis 16.

From the aforegoing description it is apparent that the invention attains its desired objects.

## Claims

1. A dental prosthesis support, comprising at least one pin to be inserted into the root canal of the tooth to be treated, and able to support a core of composite material, characterised in that said pin is constructed of fibre through which light can pass.

2. A dental prosthesis support as claimed in claim 1, characterised by comprising a plurality of said fibre pins engaged in the same canal.

3. A dental prosthesis support as claimed in claim 2, characterised in that at least one of said fibre pins engaged in the same canal is of different dimensions from the others.

4. A dental prosthesis support as claimed in claim 1 or 2, characterised by comprising two fibre pins each engaged in a different root canal within the same root.

5. A dental prosthesis support as claimed in one or more of the preceding claims, characterised in that said pin is constructed of resin-reinforced glass fibre.

6. A dental prosthesis support as claimed in one or more of the preceding claims, characterised in that said pins and said composite material have at least one chemical compound in common.

7. A dental prosthesis support as claimed in claim 6, characterised in that said chemical compound common to the pin and to the composite material is silicon dioxide.

8. A dental prosthesis support as claimed in one or more of the preceding claims, characterised in that said pin is of slightly tapering shape and has a rounded point.

9. A dental prosthesis support as claimed in one or more of the preceding claims, characterised in that said pin is of cylindrical-conical or conical shape with a non-rounded point.

10. A method for applying a dental prosthesis support in accordance with the preceding claims, comprising the following steps: preparing the root canal by filling the endodontium and removing the filling material, treating the root canal using a suitable tipped tool, then washing the canal, characterised by comprising the following further steps: applying a dentinoenamel adhesive both inside the canal and onto said pin, injecting fluid composite directly into the root canal, inserting the pin into the root canal, polymerizing the fluid composite using a light source, and completing the core by successive additions of fluid composite.

11. A method for applying a dental prosthesis support as claimed in claim 10, characterised in that said polymerization of the composite material is achieved by aiming light directly onto the top of the pin for a short period of time.

12. A method for applying a dental prosthesis support as claimed in claim 10 or 11, characterised by comprising the further step of adapting the shape of said pin to the shape of the root canal for which it is intended.
